# EUROPEAN PATENT APPLICATION

(11) **EP 1 746 279 A1**
(43) Date of publication of application: **24.01.2007**
(21) Application number: 06013325.3
(22) Date of filing: 28.06.2006
(51) Int. Cl.: F02F 7/00, F16C 9/02, F16M 1/025

(54) **Coupling system with a high coefficient of friction**

(30) Priority: 22.07.2005 IT TO20050504
(71) Applicant: FIAT AUTO S.p.A., 10135 Torino (IT)
(72) Inventor: Maiorana, Giovanni, 10135 Torino (IT)
(74) Representative: Di Francesco, Gianni

(57) **Abstract**

Coupling system for crankcase and crankcase panel in a Diesel-cycle internal combustion engine, where between the coupling surfaces of the two parts, crankcase (3) and crankcase panel (9) or bed caps, of the crankcase coming into contact with each other, around the seats of the bed bolts of the drive shaft, a thin insert designed to increase the coefficient of friction between said two parts (3, 9) in contact is placed.

## Description

The present invention relates to a coupling system with a high coefficient of friction for two parts of an aluminum crankcase for an internal combustion engine with a V-shaped cylinder configuration.

In present internal combustion engines with cylinders having a V-shaped arrangement, the mutual sliding of the aluminum crankcase and the crankcase panel (or bed caps) is prevented by the traction force exerted onto said parts by the connecting screws joining them one to the other.

If the pressure exerted onto the connecting rods by fuel combustion is very high, as is the case of Diesel-cycle engines, the clamping force of the connecting screws becomes very high and can go beyond the allowable stresses on the internal threads, especially if crankcase and crankcase panel are made of aluminum in order to reduce the overall weight of the engine. Today, since designers tend to favor engine performances to the detriment of their overall weight, said crankcases are made of cast iron and often of vermicular cast iron, even though at the expense of their workability. There are then specialized companies who have patented for instance the co-melting of cast iron inserts into aluminum crankcases. Said techniques, however, are not used in mass production due to their high costs and to their difficult industrialization.

The aim of the present invention is to propose a system for coupling the crankcase and the crankcase panel in a Diesel-cycle internal combustion engine, with cylinders having a V-shaped arrangement, which overcomes the aforesaid drawbacks.

Said aim is achieved by the present invention, whose object is a coupling system for crankcase and crankcase panel with the characteristics listed in claim 1.

Further characteristics and advantages will be apparent from the following description, with reference to the accompanying drawings, which are provided by way of non-limiting example and in which:

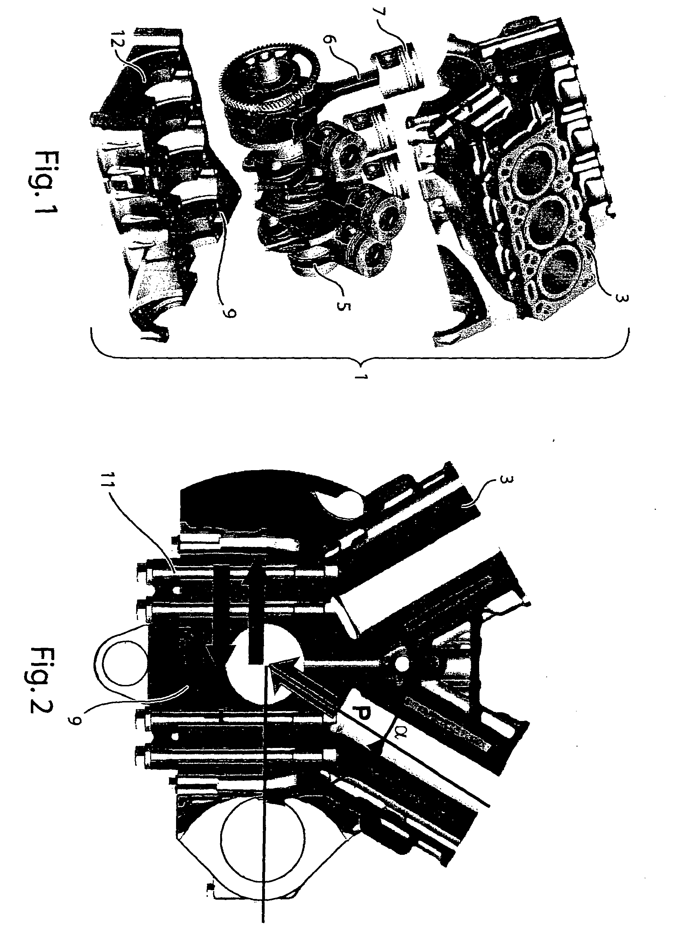

- Figure 1 is an exploded view of a crankcase with drive shaft including pistons and connecting rods, and crankcase panel of an engine with cylinders having a V-shaped arrangement,
- Figure 2 is a schematic view in cross section of the engine of Figure 1, with the indication of the forces acting upon the parts making up the crankcase, and
- Figure 3 is a view of the crankcase panel with the indication of the areas onto which a particular film is applied, whose partial section is shown beside said crankcase panel.

With reference to the figures, number 1 refers in general to the crankcase of a Diesel-cycle internal combustion engine, whose cylinders have a V-shaped arrangement.

The figure shows the real crankcase 3, the drive shaft 5 equipped with connecting rods 6 and pistons 7, and the crankcase panel 9. The crankcase and the crankcase panel are joined one to the other during engine assembly by means of coupling screws 11 (Figure 2). It should be pointed our that in some engine types there is no crankcase panel but bed caps having the same function.

As was said before, in V-shaped engines and in particular in those with a Diesel cycle, the horizontal force component F (Figure 2) transmitted onto the seats 12 of the drive shaft 5 (bed) by the connecting rods 6 is counteracted by the friction force developed between the two parts, i.e. crankcase and crankcase panel (or bed caps), thanks to the clamping force exerted by the screws 11. Without said friction the two parts would tend to slide one onto the other. In Diesel-cycle high-powered engines it is therefore necessary to manufacture the crankcase 1 using cast iron, so that it can resist, without deforming, the loads required on the screws 11 so as to achieve the friction force required to prevent shifts between said parts. An aluminum crankcase with the same loads on the screws 11 cannot be manufactured without incurring devastating deformations as far as engine resistance is concerned.

An aluminum crankcase for a high-powered Diesel engine can be manufactured only by reducing the load on the screws 11. The reduction of the load on the screws 11 can be attained only by increasing the coefficient of friction between the coupling surfaces of the two crankcase parts coming into contact one with the other.

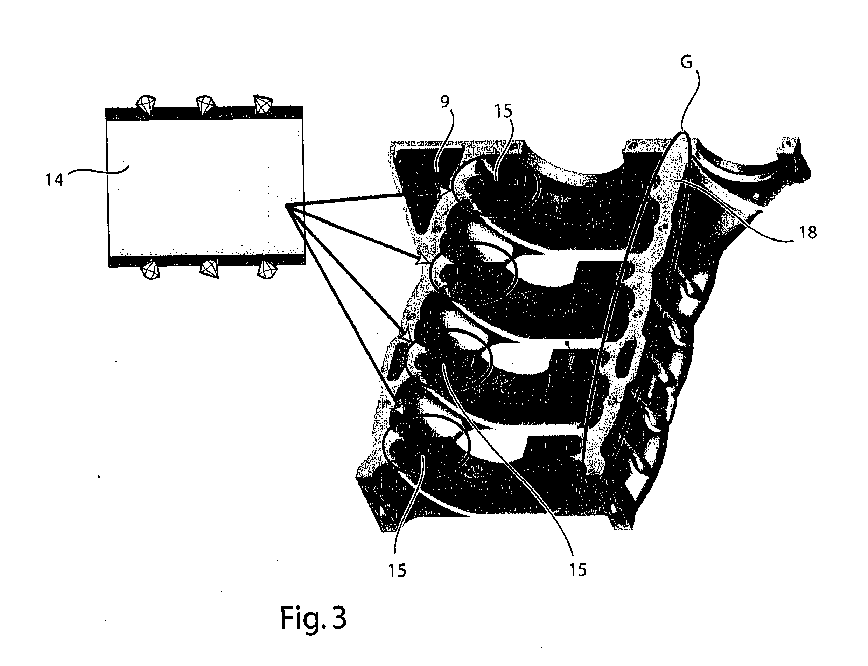

According to the invention, this can be attained by placing between the two parts in contact with each other (crankcase 3 and crankcase panel 9, or bed caps) a thin insert designed to increase the coefficient of friction between said two parts. In the case shown the insert is preferably obtained from a sheet made of sheet metal 14 (Figure 3), finished with a diamond tool on both faces, for instance with a method known per se and carried out by the German company WACHER. In Figure 3 a black circle surrounds the parts on which said sheet metal 14 has to be placed, obviously on both sides of the crankcase panel. Said parts consist of the abutment faces 15 of the seats of the bed bolts of the drive shaft 5, where the threaded holes of the screws 11 are made, whereas on the outer edge, only in case a crankcase panel is present, a seal 18 (area referred to with G in Figure 3) with a thickness of 0.100 to 0.130 mm, preferably of 0.115 mm, will be placed. The diamond-tooling of the sheet metal enables to achieve a real engagement between the two surfaces, which highly increases the coefficient of friction, and allows to manufacture aluminum crankcases also for high-powered Diesel-cycle V-shaped engines.

Obviously, other types of inserts can be used to the same effect, however without leaving the scope of protection of the present invention, as defined by the appended claims.

## Claims

1. Coupling system for crankcase and crankcase panel in a Diesel-cycle internal combustion engine, with cylinders having a V-shaped arrangement, **characterized in that** between the coupling surfaces of the two parts, crankcase (3) and crankcase panel (9) or bed caps, of the crankcase coming into contact with each other, around the seats of the bed bolts of the drive shaft, a thin insert designed to increase the coefficient of friction between said two parts (3, 9) in contact one with the other is placed.

2. Coupling system according to claim 1, **characterized in that** the thin insert is made up of a sheet metal (14) finished with a diamond tool on both sides according to a known method.

3. Coupling system according to claim 2, **characterized in that** the outer edge of the crankcase (8) is provided with a seal (18).
